# EUROPÄISCHE PATENTSCHRIFT

(11) **EP 0 903 251 B1**
(45) Veröffentlichungstag und Bekanntmachung des Hinweises auf die Patenterteilung: **19.03.2003**
(21) Anmeldenummer: 98116627.5
(22) Anmeldetag: 02.09.1998
(51) Int. Cl.: B60G 21/05, B60G 7/02

(54) **Radachse für ein Kraftfahrzeug**
Wheel axle for a motor vehicle
Essieu de roue pour véhicule à moteur

(30) Priorität: 20.09.1997 DE 19741604
(43) Veröffentlichungstag der Anmeldung: 24.03.1999
(73) Patentinhaber: Volkswagen Aktiengesellschaft, 38436 Wolfsburg (DE)
(72) Erfinder: Bufler, Ernst Dipl.-Ing., 38448 Wolfsburg (DE)

(56) Entgegenhaltungen:
- EP-A- 0 595 421
- DE-A- 3 635 021
- DE-A- 4 322 910
- FR-A- 2 520 072
- GB-A- 2 008 714
- US-A- 5 246 248
- PATENT ABSTRACTS OF JAPAN vol. 007, no. 246 (M-253), 2. November 1983 & JP 58 133908 A (TOYO KOGYO KK), 9. August 1983
- PATENT ABSTRACTS OF JAPAN vol. 095, no. 002, 31. März 1995 & JP 06 305314 A (DAIHATSU MOTOR CO LTD), 1. November 1994

## Beschreibung

Die Erfindung betrifft eine Radachse für ein Kraftfahrzeug, insbesondere eine Verbundlenker-Hinterachse, mit den Merkmalen des Oberbegriffes der Patentansprüche 1 oder 2.

Aus der DE 195 42 107 A1 ist eine Radachse für ein Kraftfahrzeug bekannt, bei der die Lenkerlager zur Erzielung eines Längsfedereffekts in Fahrzeuglängsrichtung mit einer bestimmten Stärke längsfedernd ausgeführt sind. Diese Radachse ist als Verbundlenker-Hinterachse ausgeführt und weist einen sich in Fahrzeugquerrichtung erstreckenden Querträger sowie zwei an den gegenüberliegenden Enden des Querträgers angeordnete Längsträger auf. Ein Ende jedes Längsträgers ist mit einem entsprechenden Fahrzeugrad verbunden, wobei das andere Ende des Längsträgers mit Hilfe eines Lenkerlagers an den Fahrzeugaufbau angelenkt ist. Hierbei ist das Lenkerlager als Gummi-Metall-Lager ausgeführt.

Im allgemeinen haben Radachsen, insbesondere Verbundlenker-Hinterachsen oder Koppellenkerachsen mit ihren gezogenen Längsträgern aufgrund zwangsläufig vorhandener Eigenelastizitäten an sich die Eigenschaft, daß die radführenden Längsträger unter der Einwirkung von Seitenkräften, wie sie sich z.B. bei Kurvenfahrt aufbauen, relativ zur Fahrzeuglängsachse derart verschwenkt werden, daß das Eigenlenkverhalten des Kraftfahrzeugs tendentiell in Richtung Übersteuern verändert wird bzw. eine gegebenenfalls vorhandene leichte Übersteuertendenz weiter verstärkt wird. Es ist weit verbreitet, als Lenkerlager speziell spurkorrigierende Gummi-Metall-Lager einzusetzen. Solche spurkorrigierenden Gummi-Metall-Lager besitzen im allgemeinen in Fahrzeuglängsrichtung eine vergleichsweise harte Federkennung, so daß an den Rädern in Fahrzeuglängsrichtung angreifende fahrbahnbedingte Laststöße im Inneren des Fahrzeugs von dem einen oder anderen mitunter als etwas hart empfunden werden. Um solche fahrbahnbedingten Laststöße in Fahrzeuglängsrichtung aus Komfortgründen zumindest weitgehend vom Fahrzeugaufbau fernzuhalten, wäre es generell denkbar, für die Lenkerlager Gummi-Metall-Lager mit in Fahrzeuglängsrichtung ausgeprägt weicher Federkennung einzusetzen, wodurch jedoch die an sich bereits vorhandenen Übersteuertendenzen solcher Achsen vergrößert werden würden. Es sind daher bereits Verbundlenker-Hinterachsen oder Koppellenkerachsen vorgeschlagen worden (z. B. DE-A-36 35 021), bei denen einerseits in Fahrzeuglängsrichtung ausgeprägt längsnachgiebige Gummi-Metall-Lager eingesetzt werden, um für den Fahrtkomfort förderliche Längsfedereffekte zu erzielen, und andererseits im Bereich der Radachsen an den Längsträgern angreifende, der Fahrzeugfederung dienende Federdämpfer vorgesehen sind, die stark nach hinten unter Umständen zusätzlich auch stark nach innen geneigt angeordnet sind, um dadurch beim Durchfahren einer Kurve eine die Übersteuertendenzen der Radachse abbauende Gegenlenkbewegung zu erzeugen bzw. die Schrägstellung der Radachse bei der Kurvenfahrt entsprechend zu vermeiden.

In der DE 195 42 107 A1 ist das Lenkerlager in Fahrzeuglängsrichtung längsfedernd ausgeführt und zwischen dem Lenkerlager und dem Fahrzeugaufbau ist zusätzlich eine externe Federvorrichtung angeordnet, über die ein entsprechender Längsfedereffekt in Fahrzeuglängsrichtung einstellbar ist. Um nun die unerwünschte Schrägstellung der Radachse bei einer Seitenkrafteinwirkung (Kurvenfahrt) zu eliminieren, d.h. um die dann in der Kurvenfahrt auftretenden Übersteuertendenzen zu verhindern bzw. klein zu halten, ist ein relativ komplexes Gehänge mit stangenähnlichen Elementen vorgesehen, deren konstruktive Anordnung einen relativ großen Raumbedarf benötigt. Insbesondere aufgrund des relativ großen Raumbedarfs und der komplexen sowie aufwendigen Anordnung ist die im Stand der Technik bekannte Radachse nicht optimal ausgebildet.

Eine Radachse der eingangs genannten Art ist aus der gattungsbildenden DE 43 22 910 A1 bekannt, bei der jeweils ein Koppelglied zwischen einem Lenkerlager und einem Längsträger vorgesehen ist.

Der Erfindung liegt die Aufgabe zugrunde, eine solche Radachse derart weiterzubilden, daß bei geringem konstruktiven Aufwand und Raumbedarf Übersteuertendenzen weiter vermindert werden, gleichwohl jedoch ein hoher Fahrkomfort gewährleistet ist.

Diese Aufgabe wird durch eine Radachse mit den Merkmalen der Patentansprüche 1 oder 2 gelöst.

Bei einer auf die Radachse einwirkenden Seitenkraft wird die Stärke der Längsfederung des Lenkerlagers besonders wirkungsvoll erhöht. Dadurch kann eine wesentliche Schrägstellung der Radachse vermieden werden.

Das im Stand der Technik bekannte "Gehänge" entfällt, da das - im Vergleich zu dem Gehänge nur wenig Raumbedarf benötigende - Koppelglied funktionell zusammen mit dem Lenkerlager so zusammenwirkt, daß die Stärke der Längsfederung in Fahrzeuglängsrichtung bei einer auftretenden Seitenkraft, d.h. bei einer Kurvenfahrt entsprechend einstellbar ist, nämlich dann entsprechend erhöht wird.

Durch die erfindungsgemäße Ausgestaltung können die bei Kurvenfahrten auftretenden Übersteuertendenzen entsprechend verringert bzw. vermieden werden, da die Stärke der Längsfederung entsprechend erhöht wird bzw. die Stärke der Längsfederung so stark erhöht werden kann, daß diese praktisch vollständig ausgeschaltet ist. Aufgrund der dann nicht mehr möglichen Schrägstellung der Radachse werden die oben beschriebenen Nachteile vermieden, ohne daß die erfindungsgemäße Anordnung besonders aufwendig ist oder einen großen Raumbedarf benötigt.

Vorteilhafte Ausgestaltungen sind in den weiteren Patentansprüchen angegeben.

Nachfolgend wird die Erfindung anhand von Ausführungsbeispielen näher erläutert. Die Zeichnung zeigt in:
- FIG. 1: ein erstes Ausführungsbeispiel einer erfindungsgemäßen Radachse in einer Sicht von oben in einer schematischen Darstellung ohne die Einwirkung von Seitenkräften,
- FIG. 2: ein Lenkerlager aus FIG. 1 in einer vergrößerten Darstellung ohne die Einwirkung von Seitenkräften,
- Fig. 3: die erfindungsgemäße Radachse aus FIG. 1 in einer schematischen Darstellung bei der Einwirkung von Seitenkräften,
- FIG. 4: das Lenkerlager aus FIG. 3 in einer vergrößerten Darstellung bei der Einwirkung von Seitenkräften,
- FIG. 5: ein zweites Ausführungsbeispiel einer erfindungsgemäßen Radachse in einer Sicht von oben in einer schematischen Darstellung, wobei die rechte Seite ohne die Einwirkung einer Seitenkraft und die linke Seite mit Einwirkung einer Seitenkraft dargestellt ist,
- FIG. 6: ein drittes Ausführungsbeispiel einer erfindungsgemäßen Radachse in einer Sicht von oben in einer schematischen Darstellung ohne die Einwirkung einer Seitenkraft,
- FIG. 7: das Lenkerlager aus FIG. 6 in einer vergrößerten schematischen Darstellung ohne die Einwirkung einer Seitenkraft und
- Fig. 8: das Ausführungsbeispiel aus Fig. 6 mit Einwirkung einer Seitenkraft.

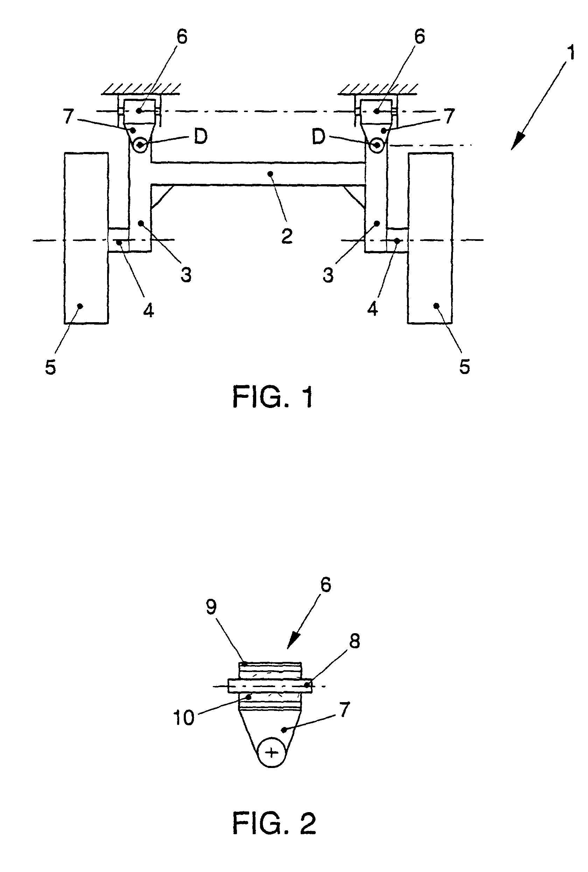

Die FIG. 1, 3, 5,6 und 8 zeigen in einer schematischen Darstellung eine Radachse 1 für ein nicht dargestelltes Kraftfahrzeug. Die hier dargestellte Radachse 1 ist als Verbundlenker-Hinterachse ausgeführt und weist einen sich in Fahrzeug-Querrichtung erstreckenden Querträger 2 und zwei an den gegenüberliegenden Enden des Querträgers 2 angeordnete Längsträger 3 auf. Ein Ende jedes Längsträgers 3, nämlich das in den FIG. 1, 3, 5 und 6 dargestellte untere Ende des Längsträgers 3 ist mit einem Radträger 4 verbindbar, wobei an dem Radträger 4 ein Kraftfahrzeugrad 5 angeordnet ist. Das andere Ende jedes Längsträgers 3, nämlich das in dem FIG. 1, 3, 5,6 und 8 dargestellte obere Ende, ist mit Hilfe eines Lenkerlagers 6 an einen hier nicht näher dargestellten Fahrzeugaufbau anlenkbar. Die in den FIG. 1 bis 8 dargestellten Lenkerlager 6 sind zur Erzielung eines Längsfedereffekts in Fahrzeuglängsrichtung mit einer bestimmten Stärke längsfedernd ausgeführt.

Um eine Schrägstellung der Radachse 1 bei auftretenden auf die Radachse 1 wirkenden Seitenkräften zu verhindern, nämlich insbesondere bei Kurvenfahrten eine Übersteuertendenz des Kraftfahrzeugs zu verhindern, ist funktionell zwischen jedem Längsträger 3 und jedem Lenkerlager 6 ein Koppelglied 7 angeordnet, wobei das Koppelglied 7 mit dem Lenkerlager 6 so zusammenwirkt, daß bei mindestens einer auf die Radachse 1 einwirkenden Seitenkraft die Stärke der Längsfederung des Lenkerlagers 6 erhöht ist. Durch die Erhöhung der Stärke der Längsfederung des Lenkerlagers 6 für den Fall, wenn die entsprechende Seitenkraft auftritt, nämlich insbesondere das Kraftfahrzeug eine Kurvenfahrt vollzieht, kann die Radachse 1 sich nicht mehr wesentlich schräg stellen, da eben die Längsfederung des Lenkerlagers 6 zumindest erhöht oder praktisch nahezu eliminiert ist. Beispielsweise - zum besseren Verständnis - vereinfacht ausgedrückt, kann das längsfedernd ausgeführte Lenkerlager 6 somit eine progressive Federkennlinie in Abhängigkeit der auftretenden Seitenkraft aufweisen. Die eingangs beschriebenen Nachteile werden insbesondere durch das funktionell zwischen dem Lenkerlager 6 und dem Längsträger 3 angeordnete Koppelglied 7 eliminiert, d.h. die Anordnung ist wesentlich vereinfacht und nimmt nur geringen Raumbedarf ein.

Bei der in den FIG 1, 3, 5,6 und 8 dargestellten Radachse 1 ist jeder Längsträger 3 als Knicklenker ausgeführt. Die in den FIG. 1, 3, 5,6 und 8 dargestellten Draufsichten auf die Radachse 1 lassen erkennen daß das Koppelglied 7 um eine im wesentlichen vertikale Achse D schwenkbar ist bzw. der Längsträger 3 so an dem Koppelglied 7 angelenkt ist, daß eine entsprechende vertikale Achse D gebildet ist.

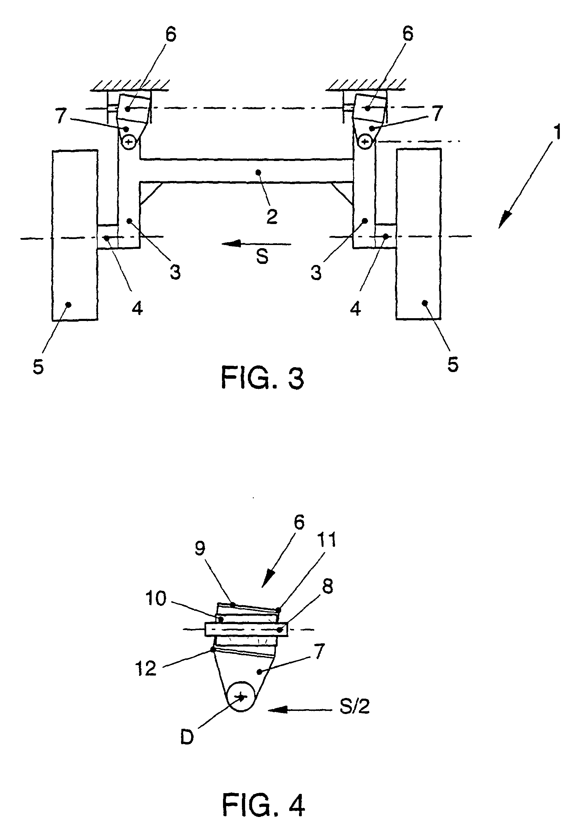

Die FIG. 1 zeigt nun ein erstes Ausführungsbeispiel für eine Radachse 1, ohne daß hier eine Seitenkraft auftritt. Hingegen zeigt die FIG. 3 die Radachse 1 bei einer auftretenden Seitenkraft S, die hier durch den entsprechenden Pfeil angedeutet ist. Aufgrund des Angriffs der Seitenkraft S, beispielsweise bei der Kurvenfahrt eines Kraftfahrzeugs, wird nun das Koppelglied 7 entsprechend verschwenkt. Durch die Verschwenkung des Koppelglieds 7 wird eine Anwinklung der Lenkerlagerung realisiert, die durch die in der FIG. 3 angewinkelt gezeichneten Lenkerlager 6 deutlich zu erkennen ist. Aufgrund der Anwinklung der Lenkerlagerung werden die Öffnungen der Lenkerlagerung an den jeweiligen Enden zugedrückt, so daß die Stärke der Längsfederung erhöht bzw. die Längsfederung praktisch aufgehoben ist. Dies soll im folgenden an den FIG. 2 und 4 näher erläutert werden.

Die FIG. 2 zeigt in vergrößerter schematischer Darstellung ein Lenkerlager 6 aus FIG. 1, also in der nicht angewinkelten Stellung, wenn keine Seitenkraft S anliegt. Das Lenkerlager 6 ist hier folglich auch nicht angewinkelt. Das Lenkerlager 6 ist hier als Gummi-Metall-Lager ausgeführt und weist eine im wesentlichen horizontale, nicht näher bezeichnete Lagerachse und eine jeweils innere und äußere Lagerhülse 8 und 9 auf.. Zwischen der inneren Lagerhülse 8 und der äußeren Lagerhülse 9 ist ein Gummikörper 10 angeordnet.

Die Anwinklung des Lenkerlagers 6 ist in FIG. 4 gut zu erkennen. Durch die Anwinklung des Lenkerlagers 6 wird ein Festklemmen des Gummikörpers 10 realisiert. Hierzu weist das Lenkerlager 6 zwei Anschläge 11 und 12 auf. In FIG. 4 ist deutlich zu erkennen, daß durch die Anwinklung des Lenkerlagers 6 der Gummikörper 10 oben rechts am Anschlag 11 und unten links am Anschlag 12 an der äußeren Lagerhülse 9 entsprechend anliegt.

Weiterhin zeigen die FIG. 2 und 4 nicht nur das Lenkerlager 6, sondern auch das Koppelglied 7, das im wesentlichen als starres Element vorzugsweise aus Metall oder einer Metallegierung hergestellt ist und im wesentlichen eine V-Form aufweist. Im allgemeinen kann das Koppelglied 7 an eine äußere Lagerhülse 9 angeschweißt bzw. mit einer äußeren Lagerhülse 9 verbunden werden. Denkbar ist auch, daß das Koppelglied 7 als Teil der Lenkerlagerung ausgebildet ist, nämlich im oberen Bereich des Koppelglieds 7 eine äußere Lagerhülse 9 als integraler Bestandteil des Koppelglieds 7 vorgesehen ist.

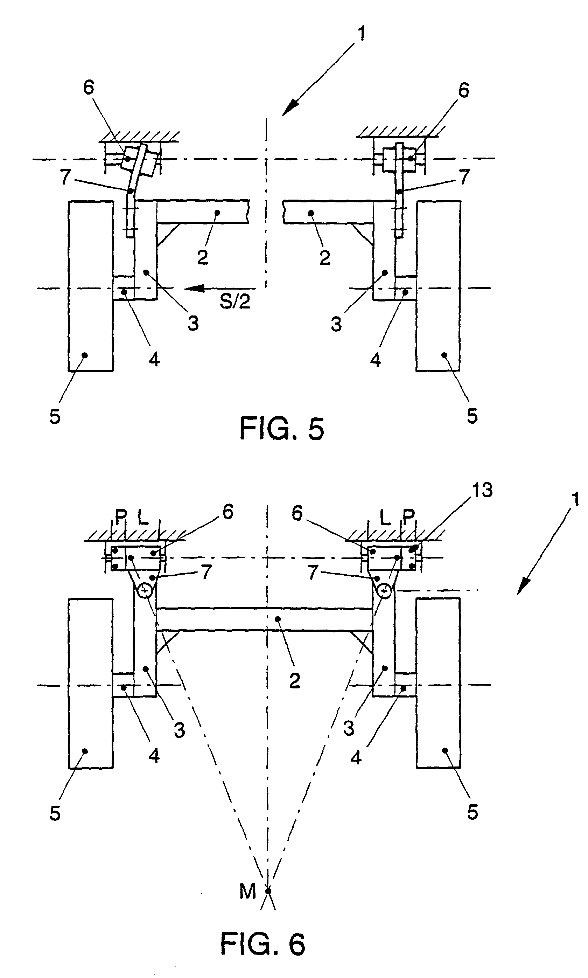

FIG. 5 zeigt nun ein zweites Ausführungsbeispiel für eine Radachse 1, wobei die rechte Seite der FIG. 5 die Radachse 1 zeigt, ohne daß eine Seitenkraft S auftritt und die linke Seite der FIG. 5 die Radachse 1 zeigt, für den Fall, daß eine Seitenkraft (hier S/2) auftritt. Das Koppelglied 7 ist hier als Federstrebe ausgeführt, d.h. das Koppelglied 7 ist aufgrund seiner Eigenelastizität entsprechend verformbar, so daß eine entsprechende Anwinklung der Lenkerlager 6 bei einer auftretenden Seitenkraft (vgl. linke Seite der FIG. 5) hervorgerufen wird.

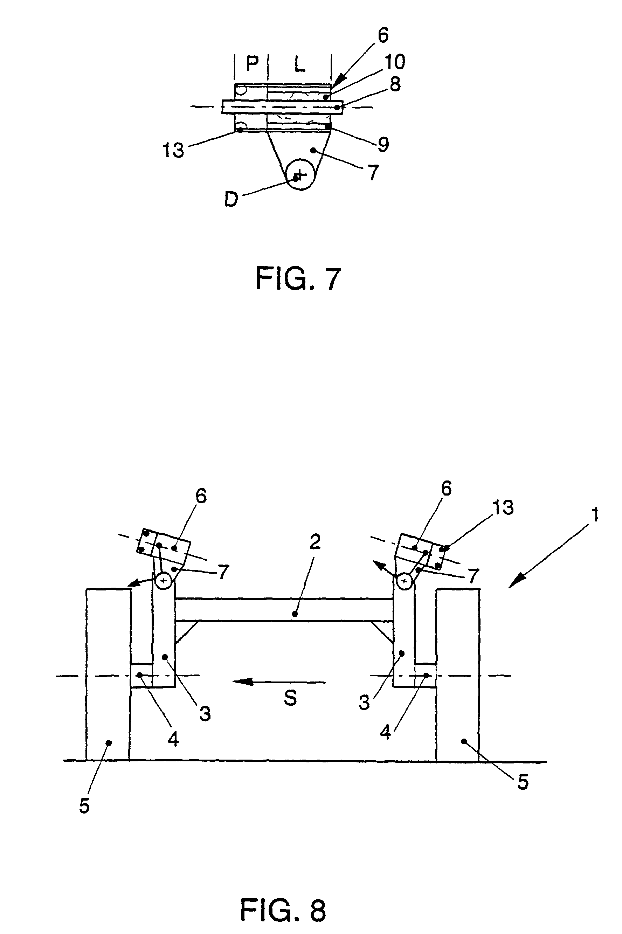

Fig. 6 zeigt eine Hinterachse, bei der das Lenkerlager 6 zusätzlich einen Pufferbereich P aufweist mit dem Anschlagpuffer 13, wie in Fig. 7 vergrößert dargestellt. Das Lenkerlager 6 weist einen Längsfederbereich L und einen Pufferbereich P auf, wobei der Anschlagpuffer 13 soviel Spiel hat, daß er erst bei Kurvenfahrt voll einsetzt. Damit wirkt bei reiner Längsfederung der Symmetriebereich (Längsfederbereich L), während bei Seitenkrafteinfluß der Pufferbereich P (Anschlagpuffer 13) sich asymmetrisch abstützt (vgl. Fig. 8). Das führt zur Überlagerung eines Seitenkraftgegenlenkens der Hinterachse um einen ideellen Pol M von Fig. 6, wie in Fig. 8 dargestellt.

Die Drehachsen der Koppelglieder 7 sind in einer Ebene angeordnet, wie dies insbesondere aus den FIG. 1, 3,5 und 6 ersichtlich ist.

Die hier dargestellte Radachse 1 ist als Verbundlenker-Hinterachse ausgeführt und weist einen Querträger 2 auf, der biegesteif und torsionsweich ausgeführt ist. Von Vorteil ist auch, wenn die Lenkerlager 6 eine frequenzselektive Dämpfung im Frequenzbereich der Eigenschwingung der Radachse 1 während der Fahrt aufweisen.

Im Endeffekt ist durch die hier dargestellte Radachse 1 eine seitenkraftgesteuerte Längsfederung der Radachse 1 möglich, so daß die Kurvenfahrteigenschaften bei der hier als Verbundlenker-Hinterachse ausgeführten Radachse 1 verbessert sind und gleichzeitig bei "normaler Geradeausfahrt" eine weiche Längsfederung gewährleistet ist. Somit ist eine Kombination von weicher Längsfederung bei "Geradeausfahrt" realisiert, die einen gewissen Komfort gewährleistet, wobei bei einer "Kurvenfahrt" harte Lenkerlager 6 realisiert sind, wodurch eine stabile Achslage erreicht ist. Insbesondere können die Lenkerlager 6 als Vertikal-Torsionsgummilager ausgeführt werden. Die hier dargestellte Radachse 1 kann nun entsprechend dimensioniert werden. Dies ist abhängig von den auftretenden Seitenkräften S, die auf die Kraftfahrzeugräder 5 wirken und im Endeffekt ein entsprechendes Moment erzeugen, so daß die Lenkerlager 6 verschwenkt werden bzw. dann auf Zug-Druck beansprucht bzw. belastet werden. Aufgrund der unterschiedlichen Ausgestaltungsmöglichkeiten für die Lenkerlager 6, insbesondere durch die Trennung des Lenkerlagers 6 in einen Federbereich L und einen Pufferbereich P wird ein seitliches Verzwängen der Lagerung verhindert, die im allgemeinen durch eine asymmetrische Kraftweiterleitung provoziert wird, die ungünstig ist. Durch die entsprechende Ausgestaltung des Lenkerlagers 6 kann dem jedoch -wie insbesondere die FIG. 6,7 und 8 zeigen - entgegengewirkt werden.

## Patentansprüche

1. Radachse (1) für ein Kraftfahrzeug, insbesondere Verbundlenker-Hinterachse, mit einem sich in Fahrzeug-Querrichtung erstreckenden Querträger (2) und zwei an den gegenüberliegenden Enden des Querträgers (2) angeordneten Längsträgem (3), wobei das Ende jedes Längsträgers (3) mit einem Radträger (4) verbindbar und das andere Ende jedes Längsträgers (3) mit Hilfe eines Lenkerlagers (6) an einen Fahrzeugaufbau anlenkbar ist, wobei die Lenkerlager (6) zur Erzielung eines Längsfedereffekts in Fahrzeuglängsrichtung mit einer bestimmten Stärke längsfedernd ausgeführt sind und jeweils einen Gummikörper (10) zwischen einer äußeren Lagerhülse (9) und einer inneren Lagerhülse (8) aufweisen, und wobei funktionell zwischen jedem Längsträger (3) und jedem Lenkerlager (6) ein Koppelglied (7) angeordnet ist, das an dem Längsträger (3) um eine im wesentlichen vertikale Achse (D) schwenkbar angeordnet ist und das mit dem Lenkerlager (6) derart zusammenwirkt, daß bei einer auf die Radachse (1) einwirkenden Seitenkraft die Stärke der Längsfederung des Lenkerlagers (6) erhöht ist, **dadurch gekennzeichnet, daß** die Lenkerlager (6) jeweils zwei Anschläge (11, 12) für den Gummikörper (10) aufweisen, sowie Öffnungen, die derart angeordnet und ausgebildet sind, daß bei einer Anwinkelung der Lenkerlager (6) die Öffnungen an den jeweiligen Enden zugedrückt werden, wobei die Stärke der Längsfederung erhöht oder aufgehoben ist, und der Gummikörper (10) durch die Anwinkelung gegen die Anschläge (11, 12) in Anlage bringbar ist.

2. Radachse (1) für ein Kraftfahrzeug, insbesondere Verbundlenker-Hinterachse, mit einem sich in Fahrzeug-Querrichtung erstreckenden Querträger (2) und zwei an den gegenüberliegenden Enden des Querträgers (2) angeordneten Längsträgem (3), wobei das Ende jedes Längsträgers (3) mit einem Radträger (4) verbindbar und das andere Ende jedes Längsträgers (3) mit Hilfe eines Lenkerlagers (6) an einen Fahrzeugaufbau anlenkbar ist, wobei die Lenkerlager (6) zur Erzielung eines Längsfedereffekts in Fahrzeuglängsrichtung mit einer bestimmten Stärke längsfedernd ausgeführt sind und jeweils einen Gummikörper (10) zwischen einer äußeren Lagerhülse (9) und einer inneren Lagerhülse (8) aufweisen, und wobei funktionell zwischen jedem Längsträger (3) und jedem Lenkerlager (6) ein Koppelglied (7) angeordnet ist, das an dem Längsträger (3) starr angeordnet und aufgrund seiner Eigenelastizität derart verformbar ist, daß eine entsprechende Anwinkelung der Lenkerlager bei einer auftretenden Seitenkraft hervorgerufen wird, und das mit dem Lenkerlager (6) derart zusammenwirkt, daß bei einer auf die Radachse (1) einwirkenden Seitenkraft die Stärke der Längsfederung des Lenkerlagers (6) erhöht ist, **dadurch gekennzeichnet, daß** die Lenkerlager (6) jeweils zwei Anschläge (11, 12) für den Gummikörper (10) aufweisen, sowie Öffnungen, die derart angeordnet und ausgebildet sind, daß bei einer Anwinkelung der Lenkerlager (6) die Öffnungen an den jeweiligen Enden zugedrückt werden, wobei die Stärke der Längsfederung erhöht oder aufgehoben ist, und der Gummikörper (10) durch die Anwinkelung gegen die Anschläge (11, 12) in Anlage bringbar ist.

3. Radachse nach Anspruch 1 oder 2, **dadurch gekennzeichnet, daß** jeder Längsträger (3) als Knicklenker ausgeführt ist.

4. Radachse nach einem der Ansprüche 1 bis 3, **dadurch gekennzeichnet, daß** das Lenkerlager (6) als Gummi-Metall-Lager ausgeführt ist.

5. Radachse nach einem der Ansprüche 1 bis 4, **dadurch gekennzeichnet, daß** das Lenkerlager (6) eine im wesentlichen horizontale Lagerachse aufweist.

6. Radachse nach einem der Ansprüche 1 bis 5, **dadurch gekennzeichnet, daß** durch die Anwinklung ein Festklemmen des Gummikörpers (10) realisierbar ist.

7. Radachse nach einem der Ansprüche 1 bis 6, **dadurch gekennzeichnet, daß** das Koppelglied (7) selbst im wesentlichen als starres Element, vorzugsweise aus Metall hergestellt ist.

8. Radachse nach einem der Ansprüche 1 bis 7, **dadurch gekennzeichnet, daß** das Koppelglied (7) als Teil der Lenkerlagerung ausgebildet ist, nämlich im oberen Bereich die äußere Lagerhülse (9) als integralen Bestandteil aufweist.

9. Radachse nach einem der Ansprüche 2 bis 5, **dadurch gekennzeichnet, daß** das Koppelglied (7) als Federstrebe ausgeführt ist.

10. Radachse nach einem der Ansprüche 1 bis 9, **dadurch gekennzeichnet, daß** das Lenkerlager (6) einen Pufferbereich (P) aufweist, so daß eine Art Anschlagpuffer (13) gebildet ist.

11. Radachse nach Anspruch 10, **dadurch gekennzeichnet, daß** durch den freien Anschlagpuffer (13) des Lenkerlagers (6) bei Vermeidung eines seitlichen Verzwängens der Lagerung eine symmetrische Längskraftweiterleitung erreicht ist.

12. Radachse nach Anspruch 10 oder 11, **dadurch gekennzeichnet, daß** durch den aufsetzenden Anschlagpuffer (13) des Lenkerlagers (6) bei Seitenkrafteinwirkung ein Achsgegenlenken überlagert wird.

13. Radachse nach einem der Ansprüche 1 bis 12, **dadurch gekennzeichnet, daß** Drehachsen der Koppelglieder (7) in einer Ebene angeordnet sind.

14. Radachse nach einem der Ansprüche 1 bis 13, **dadurch gekennzeichnet, daß** der Querträger (2) biegesteif und torsionsweich ausgeführt ist.

15. Radachse nach einem der Ansprüche 1 bis 14, **dadurch gekennzeichnet, daß** die Lenkerlager (6) eine frequenzselektive Dämpfung im Frequenzbereich der Eigenschwingung der Radachse (1) während der Fahrt aufweisen.

## Claims

1. Wheel axle (1) for a motor vehicle, in particular a compound-link rear axle, with a transverse support (2) extending in the transverse direction of the vehicle and two longitudinal supports (3) arranged at opposite ends of the transverse support (2), it being possible to connect the end of each longitudinal support (3) to a wheel carrier (4) and to connect the other end of each longitudinal support (3) pivotally to a vehicle superstructure with the aid of a link mount (6), the link mounts (6) being embodied to give a longitudinal elastic deflection effect in the longitudinal direction of the vehicle, allowing longitudinal elastic deflection of a certain magnitude, and each having a rubber body (10) between an outer mount sleeve (9) and an inner mount sleeve (8), and a coupling member being arranged functionally between each longitudinal support (3) and each link mount (6), this coupling member being arranged on the longitudinal support (3) in such a way as to be pivotable about an essentially vertical axis (D) and interacting with the link mount (6) in such a way that, when there is a lateral force acting on the wheel axle (1), the magnitude of the longitudinal elastic deflection of the link mount (6) is increased, **characterized in that** the link mounts (6) each have two stops (11, 12) for the rubber body (10) as well as openings, which are arranged and designed in such a way that when the link mounts (6) are angled, the openings at the respective ends are pressed shut, the magnitude of the longitudinal elastic deflection being increased or eliminated, and it being possible for the rubber body (10) to be brought into contact with the stops (11, 12) by the angling.

2. Wheel axle (1) for a motor vehicle, in particular a compound-link rear axle, with a transverse support (2) extending in the transverse direction of the vehicle and two longitudinal supports (3) arranged at opposite ends of the transverse support (2), it being possible to connect the end of each longitudinal support (3) to a wheel carrier (4) and to connect the other end of each longitudinal support (3) pivotally to a vehicle superstructure with the aid of a link mount (6), the link mounts (6) being embodied to give a longitudinal elastic deflection effect in the longitudinal direction of the vehicle, allowing longitudinal elastic deflection of a certain magnitude, and each having a rubber body (10) between an outer mount sleeve (9) and an inner mount sleeve (8), and a coupling member being arranged functionally between each longitudinal support (3) and each link mount (6), this coupling member being arranged rigidly on the longitudinal support (3) and being deformable in such a way, owing to its intrinsic elasticity, that corresponding angling of the link mounts is brought about when a lateral force occurs, and interacting with the link mount (6) in such a way that, when there is a lateral force acting on the wheel axle (1), the magnitude of the longitudinal elastic deflection of the link mount (6) is increased, **characterised in that** the link mounts (6) each have two stops (11, 12) for the rubber body (10) as well as openings, which are arranged and designed in such a way that when the link mounts (6) are angled, the openings at the respective ends are pressed shut, the magnitude of the longitudinal elastic deflection being increased or eliminated, and it being possible for the rubber body (10) to be brought into contact with the stops (11, 12) by the angling.

3. Wheel axle according to Claim 1 or 2, **characterized in that** each longitudinal support (3) is embodied as an articulated link.

4. Wheel axle according to one of Claims 1 to 3, **characterized in that** the link mount (6) is embodied as a rubber-metal mount.

5. Wheel axle according to one of Claims 1 to 4, **characterized in that** the link mount (6) has an essentially horizontal mount axis.

6. Wheel axle according to one of Claims 1 to 5, **characterized in that** firm clamping of the rubber body (10) can be achieved through the angling.

7. Wheel axle according to one of Claims 1 to 6, **characterized in that** the coupling member (7) itself is produced essentially as a rigid element, preferably from metal.

8. Wheel axle according to one of Claims 1 to 7, **characterized in that** the coupling member (7) is designed as part of the link mounting arrangement, namely having the outer mount sleeve (9) as an integral element in the upper region.

9. Wheel axle according to one of Claims 2 to 5, **characterized in that** the coupling member (7) is embodied as a spring strut.

10. Wheel axle according to one of Claims 1 to 9, **characterized in that** the link mount (6) has a buffer region (P), a type of the stop buffer (13) thus being formed.

11. Wheel axle according to Claim 10, **characterized in that** symmetrical transmission of longitudinal force is achieved through the free stop buffer (13) of the link mount (6) while avoiding lateral constraint of the mounting arrangement.

12. Wheel axle according to Claim 10 are 11, **characterized in that** axle countersteer is superimposed through the contact of the stop buffer (13) of the link mount (6) under the action of lateral force.

13. Wheel axle according to one of Claims 1 to 12, **characterized in that** axes of rotation of the coupling members (7) are arranged in one plane.

14. Wheel axle according to one of Claims 1 to 13, **characterized in that** the transverse support (2) is flexurally stiff and torsionally flexible.

15. Wheel axle according to one of Claims 1 to 14, **characterized in that** the link mounts (6) exhibit frequency-selective damping in the frequency range of natural vibration of the wheel axle (1) during driving.

## Revendications

1. Essieu de roue (1) pour un véhicule à moteur, en particulier essieu arrière composé à bras oscillants, avec une traverse (2) s'étendant dans le sens transversal du véhicule et deux longerons (3) disposés aux extrémités opposées de la traverse (2), dans lequel l'extrémité de chaque longeron (3) peut être assemblée à un support de roue (4) et l'autre extrémité de chaque longeron (3) peut être articulée à une structure du véhicule à l'aide d'un palier de bras oscillant (6), dans lequel les paliers de bras oscillant (6) sont réalisés avec une certaine force de suspension longitudinale en vue de produire un effet de suspension longitudinale dans le sens longitudinal du véhicule et présentent chacun un corps de caoutchouc (10) entre une douille de palier extérieure (9) et une douille de palier intérieure (8), et dans lequel un organe de couplage (7) est disposé de façon fonctionnelle entre chaque longeron (3) et chaque palier de bras oscillant (6), organe qui est disposé sur le longeron (3) de façon pivotante autour d'un axe (D) sensiblement vertical et qui coopère avec le palier de bras oscillant (6) de telle manière que, sous un effort latéral agissant sur l'essieu (1), la force de la suspension longitudinale du palier de bras oscillant (6) soit accrue, **caractérisé en ce que** les paliers de bras oscillant (6) présentent chacun deux butées (11, 12) pour le corps de caoutchouc (10), ainsi que des ouvertures qui sont disposées et configurées de telle manière que, lors d'un pivotement des paliers de bras oscillant (6), les ouvertures sur les extrémités respectives soient refermées par serrage, la force de la suspension longitudinale étant accrue ou relevée et le corps de caoutchouc (10) pouvant venir prendre appui contre les butées (11, 12) par suite du pivotement.

2. Essieu de roue (1) pour un véhicule à moteur, en particulier essieu arrière composé à bras oscillants, avec une traverse (2) s'étendant dans le sens transversal du véhicule et deux longerons (3) disposés aux extrémités opposées de la traverse (2), dans lequel l'extrémité de chaque longeron (3) peut être assemblée à un support de roue (4) et l'autre extrémité de chaque longeron (3) peut être articulée à une structure du véhicule à l'aide d'un palier de bras oscillant (6), dans lequel les paliers de bras oscillant (6) sont réalisés avec une certaine force de suspension longitudinale en vue de produire un effet de suspension longitudinale dans le sens longitudinal du véhicule et présentent chacun un corps de caoutchouc (10) entre une douille de palier extérieure (9) et une douille de palier intérieure (8), et dans lequel un organe de couplage (7) est disposé de façon fonctionnelle entre chaque longeron (3) et chaque palier de bras oscillant (6), organe qui est disposé d'une façon rigide sur le longeron (3) et qui est déformable en raison de son élasticité propre de telle manière qu'un pivotement correspondant des paliers de bras oscillant soit provoqué lorsqu'il apparaît un effort latéral, et qui coopère avec le palier de bras oscillant (6) de telle manière que, sous un effort latéral agissant sur l'essieu (1), la force de la suspension longitudinale du palier de bras oscillant (6) soit accrue, **caractérisé en ce que** les paliers de bras oscillant (6) présentent chacun deux butées (11, 12) pour le corps de caoutchouc (10), ainsi que des ouvertures qui sont disposées et configurées de telle manière que, lors d'un pivotement des paliers de bras oscillant (6), les ouvertures sur les extrémités respectives soient refermées par serrage, la force de la suspension longitudinale étant accrue ou relevée et le corps de caoutchouc (10) pouvant venir prendre appui contre les butées (11, 12) par suite du pivotement.

3. Essieu de roue suivant la revendication 1 ou 2, **caractérisé en ce que** chaque longeron (3) est constitué par un bras oscillant articulé.

4. Essieu de roue suivant l'une quelconque des revendications 1 à 3, **caractérisé en ce que** le palier de bras oscillant (6) est constitué par un palier métal-caoutchouc.

5. Essieu de roue suivant l'une quelconque des revendications 1 à 4, **caractérisé en ce que** le palier de bras oscillant (6) présente un axe de palier sensiblement horizontal.

6. Essieu de roue suivant l'une quelconque des revendications 1 à 5, **caractérisé en ce que** l'on peut réaliser un blocage du corps de caoutchouc (10) par le pivotement.

7. Essieu de roue suivant l'une quelconque des revendications 1 à 6, **caractérisé en ce que** l'organe de couplage (7) est lui-même fabriqué sous la forme d'un élément rigide, de préférence en métal.

8. Essieu de roue suivant l'une quelconque des revendications 1 à 7, **caractérisé en ce que** l'organe de couplage (7) constitue une partie de l'appui du bras oscillant, à savoir qu'il présente dans la région supérieure la douille de palier extérieure (9) comme composant intégral.

9. Essieu de roue suivant l'une quelconque des revendications 2 à 5, **caractérisé en ce que** l'organe de couplage (7) est constitué par une jambe de force à ressort.

10. Essieu de roue suivant l'une quelconque des revendications 1 à 9, **caractérisé en ce que** le palier de bras oscillant (6) présente une zone tampon (P), de façon à former une sorte de tampon de butée (13).

11. Essieu de roue suivant la revendication 10, **caractérisé en ce que** l'on obtient une transmission longitudinale symétrique des forces par le tampon de butée libre (13) du palier de bras oscillant (6) tout en évitant un déport latéral des appuis.

12. Essieu de roue suivant la revendication 10 ou 11, **caractérisé en ce qu'**un rappel de l'axe est superposé par le tampon de butée appliqué (13) du palier de bras oscillant (6) sous l'action d'un effort latéral.

13. Essieu de roue suivant l'une quelconque des revendications 1 à 12, **caractérisé en ce que** des axes de rotation des organes de couplage (7) sont disposés dans un plan.

14. Essieu de roue suivant l'une quelconque des revendications 1 à 13, **caractérisé en ce que** la traverse (2) est rigide à la flexion et souple à la torsion.

15. Essieu de roue suivant l'une quelconque des revendications 1 à 14, **caractérisé en ce que** les paliers de bras oscillant (6) présentent un amortissement sélectif selon la fréquence dans le domaine de fréquences des oscillations propres de l'essieu de roue (1) pendant la marche.
